Europäisches Patentamt

European Patent Office

Office européen des brevets

(19)

(11) Veröffentlichungsnummer : **0 351 524 B1**

(12) **EUROPÄISCHE PATENTSCHRIFT**

(45) Veröffentlichungstag der Patentschrift :
27.12.91 Patentblatt 91/52

(51) Int. Cl.⁵ : **F16L 3/12**

(21) Anmeldenummer : **89109804.8**

(22) Anmeldetag : **31.05.89**

(54) **Rohrschelle.**

(30) Priorität : 18.07.88 CH 2739/88

(43) Veröffentlichungstag der Anmeldung :
**24.01.90 Patentblatt 90/04**

(45) Bekanntmachung des Hinweises auf die
Patenterteilung :
**27.12.91 Patentblatt 91/52**

(84) Benannte Vertragsstaaten :
**AT BE CH DE ES FR GB GR IT LI NL SE**

(56) Entgegenhaltungen :
**EP-A- 0 276 640**
**DE-A- 3 014 578**
**GB-A- 2 162 416**
**GB-A- 2 183 287**

(73) Patentinhaber : **Egli, Fischer & Co. AG**
**Gotthardstrasse 6 Claridenhof**
**CH-8022 Zürich (CH)**

(72) Erfinder : **Freier, Fred**
**Hinterer Engelstein 5**
**CH-8344 Bäretswil (CH)**

(74) Vertreter : **Patentanwälte Schaad, Balass &**
**Partner**
**Dufourstrasse 101 Postfach**
**CH-8034 Zürich (CH)**

EP 0 351 524 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Rohrschelle gemäss Oberbegriff des Anspruchs 1.

Die CH-A-643338 zeigt eine Rohrschelle der genannten Art mit über ein Scharnier an den Bridensegmenten angreifenden Verbindungsstreben von qualitativ beschränkter Nachgiebigkeit. Diese Schelle besitzt den Vorteil, beim Einlegen von Rohren unterschiedlicher Grösse stets einen automatisch erfolgenden einwandfreien Eingriff der Verschlussteile zu gewährleisten.

Bei geöffnetem Verschluss sind die äusseren und inneren Endabschnitte der zwei Bridensegmente ungefähr gleich weit voneinander entfernt. Für das Einlegen des Rohres müssen nun die durch Scharniere gehaltenen Bridensegmente in eine Offenstellung geklappt werden, in welcher die Enden der äusseren Endabschnitte so weit voneinander entfernt sind, dass das Rohr zwischen die Bridensegmente eingeführt werden kann. Dies kann manuell oder durch Andrücken des Rohres an die äusseren Endabschnitte unter gegebenenfalls gleichzeitigem seitlichem Ausbiegen erfolgen, was insbesondere beim Einführen von grossen, schweren und unhandlichen Rohren mit Schwierigkeiten verbunden sein kann. Ausserdem lassen sich mit dieser bekannten Rohrschelle nur Rohre mit geringen Durchmesserunterschieden festhalten, was ein grosses Sortiment an Rohrschellen erfordert.

Weiter ist aus der DE-A-3014578 eine Rohrschelle bekannt, deren Bridensegmente ebenfalls über Scharniere an steifen Verbindungsstreben angeformt sind. An den inneren, dem Befestigungsteil zugewandten Endabschnitten der Bridensegmente sind Verschlussteile angeformt, die beim Schliessen der Rohrschelle an entsprechenden, an den Verbindungsstreben angeformten Verschlussteilen, einrasten. Bei dieser bekannten Rohrschelle werden wohl die Bridensegmente in Offenstellung gehalten, doch muss jede Verbindungsstrebe allein die gesamten Haltekräfte für das Rohr aufnehmen können, was zu grossen Kräften in den Verbindungsstreben und Scharnieren führt. Dies zieht eine entsprechende, auf grosse Kräfte ausgelegte Dimensionierung der Rohrschelle und insbesondere der Verbindungsstreben und Scharniere mit sich. Überdies ist bei grossen seitlichen Kräften eine sichere Umfassung des Rohres und ein sicheres Einrasten beider Verschlüsse nicht gewährleistet.

Entsprechend ist es Aufgabe der vorliegenden Erfindung, eine Rohrschelle einfacher Konstruktion zu schaffen, deren Bridensegmente in Offenstellung gehalten sind und beim Einlegen eines Rohrs zwangsweise in eine Verriegelungsbereitschaftslage gelangen, aus welcher ein sicherer und zuverlässiger Eingriff der Verschlussteile ohne weiteres erfolgt.

Zur Lösung dieser Aufgabe besitzt die erfindungsgemässe Rohrschelle die kennzeichnenden Merkmale von Anspruch 1.

Diese Anordnung bewirkt, dass eine Bewegung der inneren Endabschnitte gegen den Befestigungsteil mit einer Bewegung der Bridensegmente gegeneinander verbunden ist. Eine solche Bewegung der inneren Endabschnitte ist dann gegeben, wenn ein Rohr in die Schelle eingedrückt wird, um es in ihr festzulegen. Durch die zwangsläufig erfolgende Bewegung der Bridensegmente gegeneinander wird auch ein z.B. Seitenkräften ausgesetztes Rohr während dem Schliessvorgang in der Schelle zentriert. Damit ist sichergestellt, dass sich die äusseren Endabschnitte mit den Verschlussteilen einander korrekt nähern, mithin Stirnseite an Stirnseite auf gleicher Höhe nebeneinander zu liegen kommen, was der Verriegelungsbereitschaftslage entspricht, aus welcher die Bridensegmente durch eine geringfügige Bewegung in einwandfreien Eingriff gebracht werden können. Deshalb eignet sich die erfindungsgemässe Schelle besonders auch für die Montage von schweren und unhandlichen Rohren. Ausserdem können mit der gleichen Rohrschelle Rohre mit beträchtlichen Durchmesserunterschieden sicher und in engen Grenzen gleichwertig gehalten werden.

Bevorzugte Ausführungsformen der Rohrschelle weisen Merkmale der abhängigen Ansprüche auf.

Ein Ausführungsbeispiel wird nachstehend anhand der Figuren näher erläutert. Es zeigt :

Fig. 1 und 2    in Ansicht bzw. Draufsicht eine erfindungsgemässe Rohrschelle ;
Fig. 3    in Ansicht die Rohrschelle von Fig. 1 und 2, in welche ein Rohr eingelegt wird ; und
Fig. 4    in Ansicht die Rohrschelle von Fig. 1 und 2 mit eingelegtem Rohr.

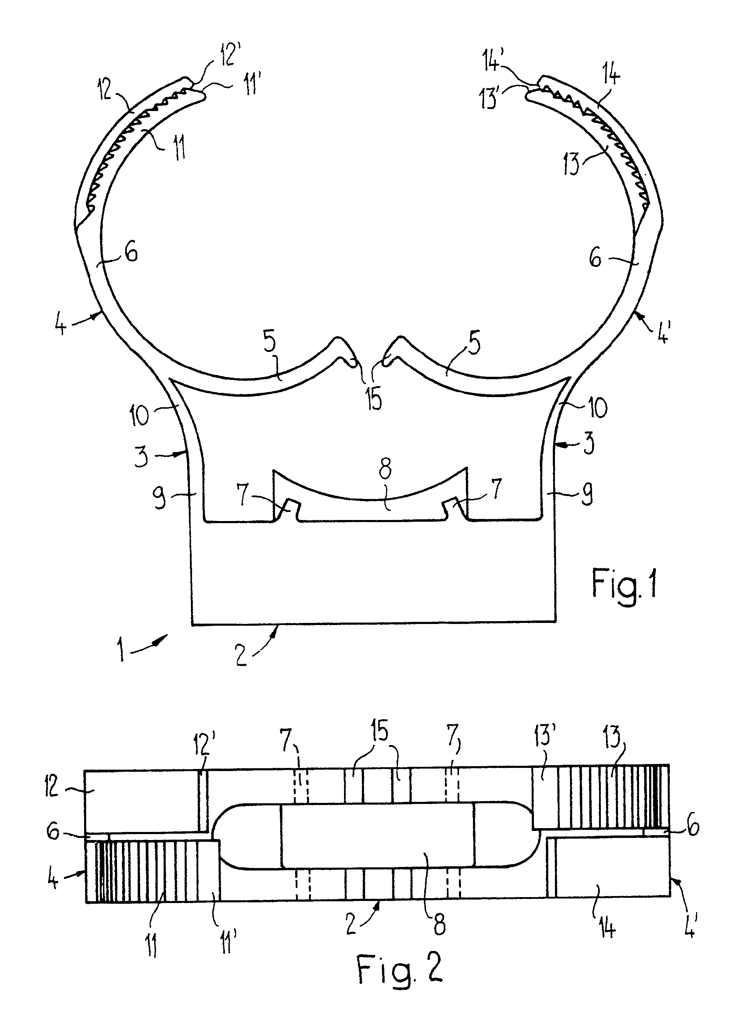

Die in Fig. 1 und 2 dargestellte Rohrschelle besitzt einen gesamthaft mit 1 bezeichneten Befestigungsteil mit einer Sockelplatte 2, an welcher Verbindungsstreben 3 zu beiden Seiten angeordnet sind. Die von der Sockelplatte 2 abgewandten Enden der Verbindungsstreben 3 gehen in Bridensegmente 4,4' über und teilen diese dadurch in einen inneren Endabschnitt 5 und einen äusseren Endabschnitt 6.

Die Sockelplatte 2 ist mit Anschlagnocken 7 und einem Widerlager 8 versehen, deren Funktion weiter unten in Zusammenhang mit dem Einlegen eines Rohrs näher erläutert wird.

Die Verbindungsstreben 3 sind in der Art einer Blattfeder biegsam ausgebildet und greifen mit ihren Enden sowohl an der Sockelplatte 2 wie auch an den Bridensegmenten 4,4' starr an, was zur Folge hat, dass die Bridensegmente 4,4' nur soweit bewegbar sind, als dies die Verformbarkeit der Verbindungsstreben 3 erlaubt. Dabei sind letztere in einem an die Sockelplatte 2 anschliessenden Abschnitt 9 versteift, so dass sie trotz ihrer schlanken Konstruktion nicht zum Knicken oder Ausbeulen neigen. Weiter besitzen die Verbindungsstreben 3 nach aussen gekrümmte Abschnitte 10, so dass die Bridensegmente 4,4' V-förmig in Offenstellung verharren und damit ein Rohr zwischen den V-förmig auseinandergespreizten Bridensegmenten 4,4' hindurchgeführt und zwischen diese gebracht werden kann.

Jeder äussere Endabschnitt 6 läuft in zwei parallelen Verschlusszungen 11, 12 und 13, 14 aus, welche abwechselnd mit einer sägezahnartigen Aussen- bzw. Innenverzahnung versehen sind, um je mit der gegenüberliegenden, gegengleich ausgebildeten Verschlusszunge 11, 14 bzw. 12, 13 auf an sich bekannte Weise zum Eingriff und damit in Verriegelungslage zu gelangen. Dabei besitzen die mit einer Aussenverzahnung versehenen Verschlusszungen 11, 13 ein längeres Zahnfeld, um einen verschiedenen Rohrdurchmessern genügenden Eingriffsbereich des Verschlusses zu gewährleisten. Die freien Enden der Verschlusszungen 11, 12, 13, 14 sind paarweise mit gegengleichen Anschrägungen 11', 12', 13', 14' versehen, was das richtige Uebereinandergleiten der zusammenwirkenden Verschlusszungen 11, 14 bzw. 12, 13 erleichtert.

Die inneren Endabschnitte 5 besitzen Haken 15 zum Angreifen an den Anschlagnocken 7, so dass gewisse Ueberbelastungen der Verbindungsstreben 3 bei extrem grossen Seitenkräften verhindert werden können ; weiter sind sie stärker gekrümmt und etwas steifer ausgebildet als die äusseren Endabschnitte 6, was dazu führt, dass sie unter der Beanspruchung eines eingelegten Rohrs nur nachgeben, um sich an dessen Kontur anzupassen.

Die inneren Endabschnitte 5 sind gabelförmig ausgebildet, so dass ein Werkzeug von aussen her an im Befestigungsteil 1 angreifenden Befestigungselementen wie Schrauben etc. angesetzt werden kann.

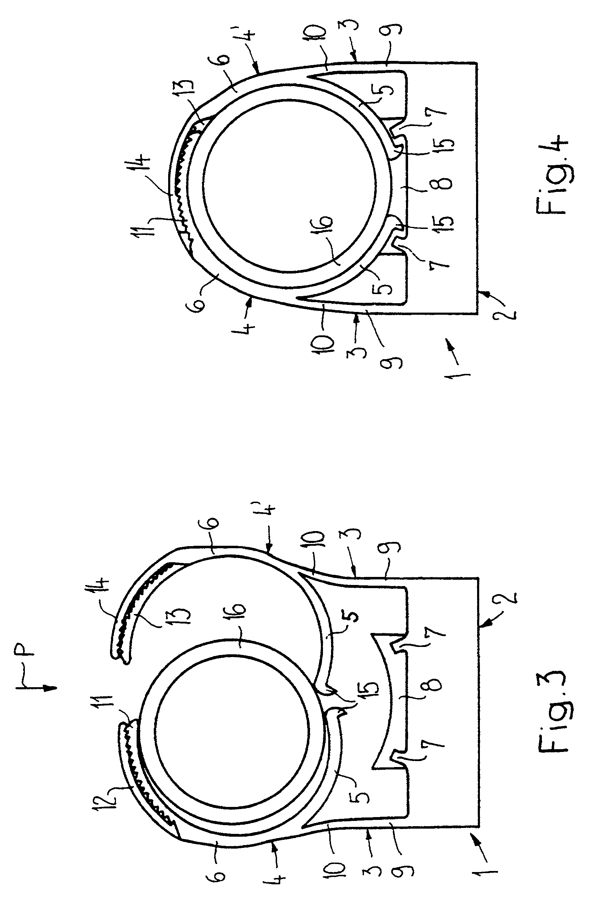

Fig. 3 zeigt die Verhältnisse beim Einlegen eines Rohrs 16 in die Schelle. Das Rohr 16, welches in Richtung des Pfeils P in die Schelle eingedrückt wird, übt auf die Endabschnitte 5 eine gegen das Befestigungsteil 1 gerichtete Kraft aus, was zur Folge hat, dass auf die weiter aussen gehaltenen Bridensegmente 4,4' ein Moment wirkt. Da nun die Verbindungsstreben 3 starr an den Bridensegmenten 4,4' angreifen, wird ein Biegemoment in sie eingeleitet und bewirkt deren Deformation, mit der Konsequenz, dass sie sich einwärts, d.h. in Schliessrichtung biegen. Damit wandern die Halterungspunkte, an welchen die Verbindungsstreben 3 in die Bridensegmente 4,4' übergehen, nach innen, d.h. gegeneinander, was wiederum bedeutet, dass die Bridensegmente 4,4' sich durch die Schwenkbewegung aus der V-Stellung aufrichten und in einer zangenförmigen Bewegung einander annähern, um so das Rohr 16 mehr und mehr zwischen sich gefangen zu nehmen. Diese Bewegung wird durch die stärkere Krümmung und steifere Ausbildung der inneren Endabschnitte 6 zusätzlich unterstützt.

In Fig. 3 ist der Fall gezeigt, in welchem zusätzlich Seitenkräfte wirken, so dass das Rohr 16 seitlich gegen das Bridensegment 4 versetzt ist, wie es in der Praxis bei schweren und unhandlichen Rohren 16 leicht vorkommt. Die gegen den Befestigungsteil 1 gerichtete Montagekraft hat aber bewirkt, dass sich das Bridensegment 4, wie oben beschrieben, aufrichtet und so das Rohr 16 den Seitenkräften entgegen in das Innere der Rohrschelle führt. Damit werden wiederum die inneren Endabschnitte 5 durch das Rohr 16 mehr und mehr in gleichem Mass niedergedrückt, was dazu führt, dass sich die Verschlusszungen 11, 12, 13, 14 auf gleicher Höhe und auf halbem Weg zueinander begegnen, womit die Verriegelungsbereitschaftsstellung erreicht ist. Da der Krümmungsradius der Bridensegmente 4,4' kleiner ist als der Radius des zu umfassenden Rohres 16, wird dieses mit Vorspannung umfasst und die freien Enden der Verschlusszungen 11, 12, 13, 14 liegen satt am Rohr 16 an. Wird das Rohr 16 nur geringfügig weiter in die Rohrschelle eingedrückt, erfolgt dann die Verriegelung zuverlässig sicher. Dabei unterstützt der durch die Verschlusszungenpaare 11, 14 bzw. 12, 13 doppelt ausgebildete Verschluss die Zuverlässigkeit der Verriegelung, der Verschluss öffnet sich nicht mehr, auch wenn das Rohr 16 nach dem ersten Einrasten des Verschlusses von den Bridensegmenten 4,4' vorerst nur lose umfasst ist und durch seine Bewegungen die Verriegelung belasten kann.

Fig. 4 zeigt die Rohrschelle mit eingesetztem Rohr 16. Die oberen Endabschnitte 6 bilden mit den Verschlusszungen 11, 12, 13, 14 eine Schlaufe, welche das Rohr 16 einschliesst. Zum Schutz gegen übermässige, auf das Rohr 16 wirkende Kräfte dienen das Widerlager 8 und die Anschlagnocken 7, welche die Endabschnitte 5 und mittelbar die Verbindungsstreben 3 vor Ueberdehnung schützen.

Der von der Sockelplatte 2 entfernte Endbereich des Widerlagers 8 weist die Form der Mantelfläche des grössten zu umfassenden Rohres 16 auf.

Bei sich in Offenstellung befindenden Bridensegmenten 4,4' können die Verbindungsstreben 3 auch eine geradlinige oder beliebige andere Form aufweisen. Es wäre auch denkbar, dass die Verbindungsstreben von einer Blattfeder aus Federstahl gebildet sind, welche mindestens an ihren Endbereichen fest mit dem Befestigungsteil bzw. den Bridensegmenten verbunden sind.

EP 0 351 524 B1

**Patentansprüche**

1. Rohrschelle mit zwei Bridensegmenten (4, 4'), die je mittels einer zwischen ihren Endabschnitten (5, 6) angreifenden, verformbaren, im Wurzelbereich starr verankerten Verbindungsstrebe (3) einstückig an einem Befestigungsteil (2) angeordnet sind, und die an ihren dem Befestigungsteil (2) abgewandten in Offenstellung bezüglich der nebeneinanderliegenden inneren Endabschnitten (5) voneinander weiter entfernten äusseren Endabschnitten (6) Teile eines durch Kraftausübung (P) auf die inneren Endabschnitte (5) einrastbaren Verschlusses (11, 12, 13, 14) aufweisen, wobei die äusseren Endabschnitte (6) bei Kraftausübung (P) auf die inneren Endabschnitte (5) aus der Offenstellung aufeinander zu bewegbar über eine Verriegelungsbereitschaftsstellung in die verriegelte Lage beingbar sind, dadurch gekennzeichnet, das die Bridensegmente (4, 4') mittels der starr an ihnen angreifenden, in Schliessrichtung biegbar ausgebildeten Verbindungsstreben (3) gehalten sind.

2. Rohrschelle nach Anspruch 1, dadurch gekennzeichnet, dass die Verbindungsstreben (3) gegen die Bridensegmente (4, 4') hin divergieren.

3. Rohrschelle nach Anspruch 1 oder 2, dadurch gekennzeichnet, dass die Verbindungsstreben (3) mindestens abschnittsweise eine bogenförmig nach aussen gekrümmte Form aufweisen.

4. Rohrschelle nach einem der Ansprüche 1-3, dadurch gekennzeichnet, dass die Verbindungsstreben (3) elastisch biegbar und vorzugsweise in Form einer Blattfeder ausgebildet sind.

5. Rohrschelle nach einem der Ansprüche 1-4, dadurch gekennzeichnet, dass die Verbindungsstreben (3) in einem an dem Befestigungsteil (1) anschliessenden Abschnitt (9) versteift sind.

6. Rohrschelle nach einem der Ansprüche 1-5, dadurch gekennzeichnet, dass die äusseren Endabschnitte (6) der Bridensegmente (4, 4') in Längsrichtung in zu einander parallele, abwechselnd eine Aussen- und eine Innenverzahnung aufweisende Verschlusszungen (11, 12, 13, 14) unterteilt sind.

7. Rohrschelle nach Anspruch 6, dadurch gekennzeichnet, dass an jedem Endabschnitt (6) zwei Verschlusszungen (11, 12, 13, 14) mit mehrteiliger Verzahnung vorgesehen sind, wobei die Aussenverzahnungen mehr Zähne aufweisen als die Innenverzahnungen.

8. Rohrschelle nach einem der Ansprüche 1-7, dadurch gekennzeichnet, dass die inneren Endabschnitte (5) der Bridensegmente (4, 4') stärker gekrümmt sind als deren äussere Endabschnitte (6).

9. Rohrschelle nach Anspruch 8, dadurch gekennzeichnet, dass der grösste Krümmungsradius der Bridensegmente (4, 4') kleiner ist als der Radius des kleinsten zu umfassenden Rohres (16).

**Claims**

1. A pipe clip with two clip segments (4, 4') each of which, by means of a deformable connecting member (3) engaging between their end portions (5, 6) and rigidly anchored at the root area, are disposed in one piece on a fixing part (2), and which comprise at their outer end portions (6), which are remote from the fixing part (2) and in an open position in respect of the adjacently disposed inner end portions (5) farther removed from one another, parts of a closure member (11, 12, 13, 14) adapted for engagement when force (P) is exerted on the inner end portions (5), whereby the outer end portions (6) when force (P) is exerted on the inner end portions (5) being capable of being moved out of the open position towards each other and into a locked position by passing through a stand-by position, characterised in that the clip segments (4, 4') are held by the connecting members (3) which engage them rigidly while being capable of flexion in the direction of closure.

2. A pipe clip according to Claim 1, characterised in that the connecting members (3) diverge towards the clip segments (4, 4').

3. A pipe clip according to Claim 1 or 2, characterised in that the connecting members (3) have at least portions which have an arcuately outwardly curved form.

4. A pipe clip according to one of Claims 1 to 3, characterised in that the connecting members (3) are elastically flexural and preferably take the form of a leaf spring.

5. A pipe clip according to one of Claims 1 to 4, characterised in that the connecting members (3) have a portion (9) which is stiffened and which is adjacent the fixing part (1).

6. A pipe clip according to one of Claims 1 to 5, characterised in that the outer end portions (6) of the clip segments (4, 4') are subdivided in a longitudinal direction into closure tongues (11, 12, 13, 14) which alternately have externally cut and internally cut teeth.

7. A pipe clip according to Claim 6, characterised in that at each end portion (6), two closure tongues (11, 12, 13, 14) are provided with a multi-part tooth system, the externally cut tooth systems comprising more teeth than the internally cut tooth systems.

8. A pipe clip according to one of Claims 1 to 7, characterised in that the inner end portions (5) of the clip

4

segments (4, 4′) are more intensely curved than are their outer end portions (6).

9. A pipe clip according to Claim 8, characterised in that the greatest radius of curvature of the clip segments (4, 4′) is smaller than the radius of the smallest pipe (16) which is to be gripped.


**Revendications**

1. Collier de fixation comportant deux segments (4, 4′) en étriers, qui sont disposés chacun d'un seul tenant sur un élément de fixation (2) au moyen d'une entretoise de liaison (3) déformable, fortement ancrée dans la zone de racine, les segments agissant entre leurs parties d'extrémités (5, 6), et étant pourvus, sur leurs parties d'extrémités extérieures (6) opposées à l'élément de fixation (2) et en position ouverte plus éloignées l'une de l'autre que les parties d'extrémités intérieures (5) situés côte à côte, d'une fermeture (11, 12, 13, 14) pouvant être encliquetée en exerçant une force (P) sur les parties d'extrémités intérieures (5), les parties d'extrémités extérieures (6) pouvant être déplacées l'une vers l'autre hors de la position d'ouverture, et pouvant être amenées dans la position verrouillée en passant par une position de préparation au verrouillage en exerçant une force (P) sur les parties d'extrémités intérieures (5), caractérisé en ce que les segments en étrier (4, 4′) sont maintenus au moyen des entretoises de liaison (3) fixés rigidement sur eux, et réalisés de manière flexible en direction de la fermeture.

2. Collier de fixation selon la revendication 1, caractérisé en ce que les entretoises de liaison (3) divergent en direction des segments en étriers (4, 4′).

3. Collier de fixation selon la revendication 1 ou 2, caractérisé en ce que les entretoises de liaison (3) présentent, au moins partiellement, une forme incurvée vers l'extérieur, à profil en arc.

4. Collier de fixation selon l'une des revendications 1 à 3, caractérisé en ce que les entretoises de liaison (3) sont flexibles de manière élastique et sont de préférence réalisées sous forme d'un ressort à laie.

5. Collier de fixation selon l'une des revendications 1 à 4, caractérisé en ce que les entretoises de liaison (3) sont raidies dans une partie (9), qui se raccorde à l'élément de fixation (1).

6. Collier de fixation selon l'une des revendications 1 à 5, caractérisé en ce que les parties d'extrémités extérieures (6) des segments en étriers (4, 4′) comportent des languettes de fermeture (11, 12, 13, 14) parallèles entres elles en direction longitudinale, présentant en alternance une denture extérieure et une denture intérieure.

7. Collier de fixation selon la revendication 6, caractérisé en ce que deux languettes de fermeture (11, 12, 13, 14) à denture formée de plusieurs éléments sont prévues à chaque partie d'extrémité (6), les dentures extérieures présentant plus de dents que les dentures intérieures.

8. Collier de fixation selon l'une des revendications 1 à 7, caractérisé en ce que les parties d'extrémités intérieures (5) des éléments en étriers (4, 4′) sont plus fortement incurvées que les parties d'extrémités extérieures (6) de ceux-ci.

9. Collier de fixation selon la revendication 8, caractérisé en ce que le plus grand rayon de courbure des segments en étriers (4, 4′) est plus petit que le rayon du plus petit tube (16) à fixer.

EP 0 351 524 B1

Fig.1

Fig. 2

6

Fig.3

Fig.4

EP 0 351 524 B1